# EUROPÄISCHE PATENTANMELDUNG

(11) **EP 3 848 233 A1**
(43) Veröffentlichungstag der Anmeldung: **14.07.2021**
(21) Anmeldenummer: 20151018.7
(22) Anmeldetag: 09.01.2020
(51) Int. Cl.: B60L 53/16, H01R 13/639

(54) **STECKER FÜR EIN LADEKABEL EINES ELEKTROAUTOS**

(71) Anmelder: ConWys AG, 6023 Rothenburg (CH)
(72) Erfinder: Wystron, Alexander, 6005 Luzern (CH)
(74) Vertreter: Brinkmann & Partner

(57) **Zusammenfassung**

Die Erfindung betrifft einen Stecker (1) für ein Ladekabel eines Elektroautos, welcher eine Ausnehmung (4) für einen steckdosenseitigen Rastpin (5) aufweist, gekennzeichnet durch wenigstens einen Sensor (6) zur Erfassung der Positionierung des Rastpins (5) in der Ausnehmung (4).

## Beschreibung

Die vorliegende Erfindung betrifft einen Stecker für ein Ladekabel eines Elektroautos.

Beim Aufladen eines Elektroautos, worunter reine Elektroautos als auch Hybridfahrzeuge zu verstehen sind, wird der Aufladestecker in eine entsprechende Steckdose eingeführt. Diese Steckdose ist meist in Form einer sogenannten Wallbox bereitgestellt, die auch die entsprechende Elektronik beinhaltet. Vor Beginn eines jeden Ladevorganges wird von der Elektronik zunächst überprüft, ob eine ausreichende elektrische Verbindung zum Auto ausgebildet ist.

Das Feststellen einer ausreichenden elektrischen Verbindung ist ein Überprüfungsvorgang, der einige Zeit in Anspruch nimmt. Nutzer warten diese Zeit in der Regel nicht ab, sondern verlassen nach Herstellen der mechanischen Verbindung den Ort, an dem das zu ladende Fahrzeug abgestellt ist. Der Nutzer kann somit nicht sicher sein, dass er den Stecker tatsächlich richtig in die Steckdose eingeführt hat.

Stromladungen können nach verschiedenen Programmen ablaufen. Beispielsweise kann ein Ladezeitraum vorgegeben werden, um bei Bedarf kostengünstigen Nachtstrom nutzen zu können. Es gibt aber auch andere Einstellmöglichkeiten.

In den Fällen derartiger Vorprogrammierungen wird erst kurz vor Beginn der Ladung überprüft, ob die ausreichende elektrische Verbindung besteht. Das Ladesystem schaltet sich ein und führt die Überprüfung durch. Fällt die Überprüfung negativ aus, wird die Ladung nicht durchgeführt. Dies führt zu unerwünschten Resultaten.

In der Praxis kommen mechanische Fehlverbindungen sehr häufig vor, was zu häufigen Fehl- bzw. Nichtladungen führt.

Insbesondere, um das Ladegeschirr vor unbeabsichtigtem Lösen oder gar Diebstahl zu schützen, ist in der Regel steckdosenseitig ein federbelasteter Rastpin oder Mikroaktuator vorgesehen, der in eine Ausnehmung des Steckers eingreift und diesen verrastet. Ausgehend vom vorbeschriebenen Stand der Technik liegt der vorliegenden Erfindung die **Aufgabe** zugrunde, einen Stecker für ein Ladekabel eines Elektroautos bereitzustellen, mit welchem Fehl- bzw. Nichtladungen aufgrund unzureichender mechanischer Verbindung weitgehend vermieden werden können.

Zur technischen **Lösung** dieser Aufgabe wird ein Stecker mit den Merkmalen des Patentanspruches 1 vorgeschlagen. Weitere Vorteile und Merkmale ergeben sich aus den Unteransprüchen.

Erfindungsgemäß weist der Stecker im Bereich der Ausnehmung wenigstens einen Sensor auf, mit welchem die Positionierung des Rastpins oder des Mikroaktuators in der Ausnehmung detektierbar ist. Bei bestimmungsgemäßer Verrastung erzeugt der Sensor ein Signal, welches direkt oder indirekt zur Erzeugung eines Kontrollsignals verwendet wird. Das Kontrollsignal wird steckerseitig über ein Anzeigeelement bereitgestellt. Dabei kann das Anzeigeelement eine Lichtquelle und/oder eine Vibrationsquelle und/oder ein Haptikelement umfassen. Es ist so die Ausgabe eines optischen und/oder akustischen und/oder haptischen Kontrollsignals möglich. Ein Verwender des erfindungsgemäßen Steckers erhält damit unmittelbar nach einem Einführen des Steckers in eine korrespondierende Steckdose eine Rückmeldung, wenn der Stecker ordnungsgemäß in die Steckdose eingeführt und dort verrastet ist. Es ist so sichergestellt, dass durch den Nutzer kontrollierbar eine korrekte mechanische Verbindung zwischen Stecker und Steckdose ausgebildet ist. Da das diesbezügliche Kontrollsignal vom Stecker unmittelbar abgegeben wird, nachdem der Stecker ordnungsgemäß in die Steckdose eingeführt ist, bedarf es kein nutzerseitiges Abwarten. Unterbleibt nach einem Einführen des Steckers in die Steckdose die Abgabe eines Kontrollsignals, so ist für den Nutzer unmittelbar deutlich, dass keine korrekte mechanische Verbindung zwischen Stecker und Steckdose ausgebildet ist. Er kann in diesem Fall nachbessern und den Stecker entweder ziehen und erneut in die Steckdose einführen oder den Stecker für einen korrekten Sitz innerhalb der Steckdose nachpositionieren. In jedem Fall gestattet es die erfindungsgemäße Ausgestaltung, dass der Verwender mittels des Kontrollsignals eine unmittelbare Rückmeldung bekommt, sobald der Stecker bestimmungsgemäß in die Steckdose eingeführt, mithin eine mechanische Verbindung zwischen Stecker und Steckdose ausgebildet ist, die für einen im weiteren durchzuführenden Ladevorgang zwingend erforderlich ist.

Als Sensor kommt eine Vielzahl von möglichen Elementen in Betracht. So können optische Sensoren in Form von Lichtschranken, mechanische Sensoren in Form von Drucksensor, Erfassungen von Verschiebungen, Drehelemente und dgl. eingesetzt werden. Auch Magnetsensoren kommen in Betracht, ebenso wie ausschließlich mechanisch arbeitende Sensoren. Dabei haben ausschließlich mechanisch arbeitende Sensoren den Vorteil, dass sie weniger verschmutzungsanfällig und robuster in der Ausgestaltung sind, was sich vorteilhaft auf die Langlebigkeit auswirkt.

Wesentliche Aufgabe des Sensors bzw. einer möglichen Vielzahl von Sensoren ist es, die bestimmungsgemäße Positionierung des Rastpins oder des Mikroaktuators in der Ausnehmung zu überwachen und ein Signal zu erzeugen.

Ein steckerseitiges Anzeigeelement kann in unterschiedlicher Form ausgebildet sein. Es kann ein optisches Anzeigeelement sein, welches beispielsweise eine Lichtquelle, vorzugsweise eine LED umfasst. Es kann eine Vibrationsquelle umfassen, ein Haptikelement, eine Geräuschquelle in Form beispielsweise eines Soundgenerators und dgl.

Ein Haptikelement kann ein solches sein, welches sich für den Benutzer fühlbar verändert, also beispielsweise aus der Steckerkontur herausfährt, sich bewegt, einen Kontrollstift darstellt oder dgl. Ein Soundgenerator kann ein entsprechendes Geräusch erzeugen, welches über einen Lautsprecher verbreitet wird. Die Vibrationsquelle kann eine bestimmte Art von Vibration erzeugen, eine LED kann beispielsweise ein bestimmtes Lichtsignal erzeugen.

Wesentlich ist, dass der Benutzer bei Herstellen der mechanischen Verbindung direkt ein Signal erhält, welches ihn darüber informiert, dass die mechanische Verbindung bestimmungsgemäß ausgeführt wurde.

Gemäß der Erfindung wird mit überschaubarem wirtschaftlichem Aufwand ein Stecker für ein Ladekabel dahingehend weitergebildet, dass Fehl- oder Nichtladungen infolge von fehlerhaften mechanischen Verbindungen weitgehend ausgeschlossen sind.

Weitere Vorteile und Merkmale der Erfindung ergeben sich aus der folgenden Beschreibung anhand der Figuren. Dabei zeigen:

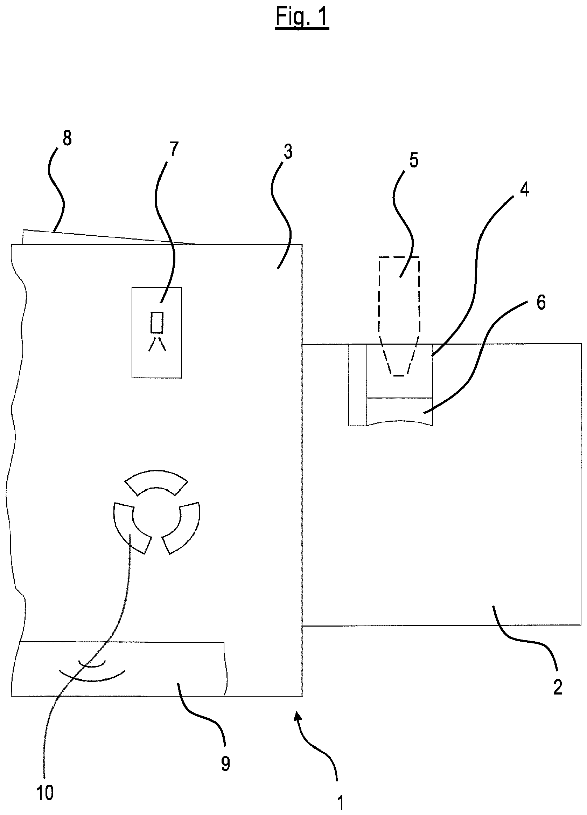

- Fig. 1: eine schematische Darstellung eines Ausführungsbeispiels für einen erfindungsgemäßen Stecker.

Fig. 1 zeigt schematisch den vorderen Teil eines Steckers 1, welcher ein Steckteil 2 und einen Griffteil 3 umfasst. Der Stecker ist in der Regel mit einem nicht gezeigten Kabel verbunden und dient dem Einstecken in die Steckdose einer Ladestation. Ladestationsseitig ist in der Regel an einer vorgegebenen Position ein Rastpin 5 vorgesehen, der in eine Ausnehmung 4 des Steckteils 2 des Steckers 1 einrastet, wenn der Stecker in der bestimmungsgemäßen Position in die Dose eingesteckt ist. Daraus ergibt sich automatisch auch die bestimmungsgemäße Position des Rastpins 5 in der Ausnehmung 4. Anstelle des in der Figur gezeigten Rastpins 5 kann auch ein Mikroaktuator vorgesehen sein. Dieser fährt federbelastet und/oder motorgetrieben aus, um zum Zwecke der Verrastung des Steckers innerhalb der Steckdose in die dafür vorgesehene Ausnehmung 4 einzufahren. Es können auch andere Arten von Rastelementen zum Einsatz kommen. Entscheidend ist, dass bei einem bestimmungsgemäß in eine Steckdose eingeführten Stecker eine Verrastung von Stecker und Steckdose stattfindet, zu welchem Zweck ein steckerseitiges Rastelement in eine dafür vorgesehene Rastmulde der Steckdose eingreift. Diese ordnungsgemäße Verrastung wird erfindungsgemäß sensorisch erfasst und einem Nutzer wird die ordnungsgemäße Verrastung angezeigt, beispielsweise optisch, haptisch und/oder akustisch.

Im gezeigten Ausführungsbeispiel ist schematisch eine Sensorbaugruppe 6 im Bereich der Ausnehmung 4 gezeigt. Diese Sensorbaugruppe erfasst die bestimmungsgemäße Positionierung des Rastpins 5 in der Ausnehmung 4. Das daraufhin erzeugte Signal kann über eine nicht gezeigte Elektronik direkt oder indirekt in eine Anzeige umgesetzt werden.

Eine Anzeige im Sinne der vorliegenden Erfindung kann beispielsweise eine LED 7 sein, ein Haptikelement 8, welches aus der Kontur des Steckers 1 hervortritt, eine Vibration über die Vibrationsquelle 9 oder auch ein Sound über den Lautsprecher 10. Beliebige Kombinationen der gezeigten Möglichkeiten oder auch jede für sich sind Ausführungsformen der vorliegenden Erfindung.
Die vorliegende Beschreibung dient der Erläuterung und ist nicht beschränkend.

### Bezugszeichen

- 1: Stecker
- 2: Steckteil
- 3: Griffteil
- 4: Ausnehmung
- 5: Rastpin
- 6: Sensor
- 7: LED
- 8: Haptikelement
- 9: Vibrationsquelle
- 10: Lautsprecher

## Patentansprüche

1. Stecker (1) für ein Ladekabel eines Elektroautos, welcher wenigstens eine Ausnehmung (4) für einen steckdosenseitigen Rastpin (5) oder Mikroaktuator aufweist, **gekennzeichnet durch** wenigstens einen Sensor (6) zur Erfassung der Positionierung des Rastpins (5) oder des Mikroaktuators in der Ausnehmung (4).

2. Stecker (1) nach Anspruch 1, **dadurch gekennzeichnet, dass** der Sensor (6) ein optischer Sensor ist.

3. Stecker nach einem der vorhergehenden Ansprüche, **dadurch gekennzeichnet, dass** der Sensor (6) ein mechanischer Sensor ist.

4. Stecker nach Anspruch 3, **dadurch gekennzeichnet, dass** der Sensor (6) ein Drucksensor ist.

5. Stecker nach einem der vorhergehenden Ansprüche, **dadurch gekennzeichnet, dass** dieser mehrere Sensoren (6) aufweist.

6. Stecker nach einem der vorhergehenden Ansprüche, **dadurch gekennzeichnet, dass** der Sensor (6) bei bestimmungsgemäßer Positionierung des Rastpins (5) oder des Mikroaktuators in der Ausnehmung (4) ein Signal erzeugt.

7. Stecker nach einem der vorhergehenden Ansprüche, **dadurch gekennzeichnet, dass** dieser ein Anzeigeelement aufweist.

8. Stecker nach Anspruch 7, **dadurch gekennzeichnet, dass** das Anzeigeelement eine Lichtquelle umfasst.

9. Stecker nach Anspruch 8, **dadurch gekennzeichnet, dass** die Lichtquelle eine LED (7) aufweist.

10. Stecker nach einem der vorhergehenden Ansprüche 7 bis 9, **dadurch gekennzeichnet, dass** das Anzeigeelement eine Vibrationsquelle (9) umfasst.

11. Stecker nach einem der vorhergehenden Ansprüche 7 bis 10, **dadurch gekennzeichnet, dass** das Anzeigeelement ein Haptikelement (8) umfasst.

12. Stecker nach Anspruch 11, **dadurch gekennzeichnet, dass** das Haptikelement (8) verstellbar ist.

13. Stecker nach einem der vorhergehenden Ansprüche 7 bis 12, **dadurch gekennzeichnet, dass** das Anzeigeelement eine Geräuschquelle umfasst.

14. Stecker nach Anspruch 13, **dadurch gekennzeichnet, dass** die Geräuschquelle ein Soundgenerator ist.
